(19) Europäisches Patentamt
European Patent Office
Office européen des brevets

(11) Veröffentlichungsnummer : **0 152 086**
**B1**

(12) # EUROPÄISCHE PATENTSCHRIFT

(45) Veröffentlichungstag der Patentschrift : **11.11.87**

(51) Int. Cl.⁴ : **G 03 G 5/09**, G 03 G 5/08, C 09 B 23/12

(21) Anmeldenummer : **85101403.5**

(22) Anmeldetag : **09.02.85**

(54) **Elektrophotographisches Aufzeichnungsmaterial.**

(30) Priorität : **16.02.84 DE 3405487**

(43) Veröffentlichungstag der Anmeldung : **21.08.85 Patentblatt 85/34**

(45) Bekanntmachung des Hinweises auf die Patenterteilung : **11.11.87 Patentblatt 87/46**

(84) Benannte Vertragsstaaten : **DE GB NL**

(56) Entgegenhaltungen :
**DE-A- 3 141 554**
**DE-A- 3 319 654**
**DE-B- 1 772 318**
**DE-C- 704 141**
**US-A- 4 138 266**

(73) Patentinhaber : **HOECHST AKTIENGESELLSCHAFT**
**Postfach 80 03 20**
**D-6230 Frankfurt am Main 80 (DE)**

(72) Erfinder : **Franke, Werner, Dr. Dipl.-Chem.**
**Wendelsteinstrasse 58**
**D-6200 Wiesbaden (DE)**
Erfinder : **Brahm, Richard**
**Im Blumengarten 33**
**D-6507 Ingelheim (DE)**

**EP 0 152 086 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft ein elektrophotographisches Aufzeichnungsmaterial, bestehend aus einem elektrisch leitenden Schichtträger und einer photoleitfähigen Schicht, enthaltend Photoleiter, Sensibilisierungsfarbstoff, Bindemittel und übliche Zusätze.

Es ist bekannt, für die elektrophotographische Reproduktion Schichten zu verwenden, die Zinkoxid als Photoleiter enthalten und dessen spektrale Empfindlichkeit im Bereich des langwelligen UV-Lichtes um etwa 350 nm bis etwa 400 nm liegt. Diese Schichten werden zur Erweiterung des spektralen Empfindlichkeitsbereiches mit Farbstoffen unterschiedlicher Verbindungsklassen versehen. Hierzu gehören Triphenylmethan-Farbstoffe, Diarylmethan-Farbstoffe, Monomethincyanine, Trimethincyanine, Styrylfarbstoffe, Oxonole, Merocyanine, komplexe Cyanine, Azenium-Farbstoffe, Azofarbstoffe, Anthrachinonfarbstoffe, Indigofarbstoffe, Vinylen-Farbstoffe, Azomethine (GB-PS 1 020 504, US-PS 3 052 540). Aus diesen Gruppierungen seien beispielsweise Rose Bengale (C.I. 45440), Acridin Orange (C.I. 46005), Rhodamin B (C.I. 45170), Eosin (C.I. 45380), Fluorescein-Na-Salz (C.I. 45350), Brillantgrün (C.I. 42040), Pinacyanol (C.I. 808) genannt. Weitere Farbstoffe zur Sensibilisierung sind aus GB-PS 1 200 901, US-PS 3 241 959 oder DE-PS 2 235 408 bekannt.

Es ist ferner bekannt (DE-PS 2 526 720, entsprechend US-PS 4 063 984), bei einem elektrophotographischen Aufzeichnungsmaterial mit einem elektrisch leitenden Schichtträger zur Herstellung von Druckformen oder gedruckten Schaltungen, die photoleitfähige Schicht mit Cyaninfarbstoffen der allgemeinen Formel

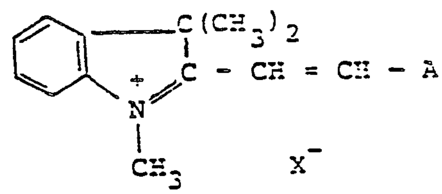

in der A gleich einer gegebenenfalls substituierten Indolyl-Gruppe, Phenylaminogruppe oder einer Indolinylgruppe und X ein einwertiges Anion bedeuten, zu versehen. Diese Cyaninfarbstoffe wirken zwar mit organischen Photoleitern im kurzwellig orthochromatischen Gebiet, erweisen sich jedoch für Zinkoxid enthaltende Photoleiterschichten als wirkungslos.

Andere, auch in Zinkoxid-Photoleiterschichten erzielbare Sensibilisierungen besitzen vielfach den Nachteil, daß sie einen sehr breiten Fuß der spektralen Sensibilisierung aufweisen, was zum Beispiel besonders bei Eosin, Bromphenolblau oder Rhodamin in Verbindung mit einer nachteiligen Restfärbung der photoleitfähigen Schicht bzw. des Trägermaterials, wie Papier, in Erscheinung tritt. Hierdurch erweist sich das Aufzeichnungsmaterial als vermindert dunkelkammersicher. Nachteilig ist auch, daß zuweilen das Sensibilisierungsmaximum nicht scharf ausgebildet ist. Oft liegt das Maximum auch nicht in dem Gebiet, in dem die zur Exposition benutzte Lichtquelle am stärksten emittiert, was zum Beispiel bei einem Aufzeichnungsmaterial für Laserstrahlbelichtung von entscheidender Wichtigkeit ist. Darüberhinaus wird oftmals zwar die spektrale Lichtempfindlichkeit erhöht, die Allgemeinempfindlichkeit aber vermindert bzw. nicht verbessert. Vielfach sind auch, um eine ausreichende Sensibilisierung zu erreichen, relativ große Farbstoffzusätze erforderlich, was Ladungsaufnahme und Dunkelwiderstand der Schicht verschlechtern kann. Schließlich färben die verwendeten Farbstoffe vielfach die photoleitfähige Schicht stark an, was für manche Anwendungsgebiete, zum Beispiel Kopier- und Registrierpapiere, hinderlich ist.

Es war deshalb Aufgabe der Erfindung, für Zinkoxid-Photoleiterschichten einen Sensibilisierungsfarbstoff zu finden, der bei guter Dunkelkammersicherheit mit einem Steilabfall der spektralen Lichtempfindlichkeit nach dem längerwelligen Bereich hin sich durch ein ausgeprägtes Sensibilisierungsmaximum im Bereich von etwa 500 nm auszeichnet und der ihnen eine intensive spektrale Lichtempfindlichkeit verleiht, ohne daß eine störende Restfärbung auftritt.

Die Lösung dieser Aufgabe geht aus von einem elektrophotographischen Aufzeichnungsmaterial, bestehend aus einem elektrisch leitenden Schichtträger und einer photoleitfähigen Schicht, enthaltend Photoleiter, Sensibilisierungsfarbstoff, Bindemittel und übliche Zusätze, und sie ist gekennzeichnet durch die Kombination von Zinkoxid als Photoleiter und einer Verbindung der allgemeinen Formel

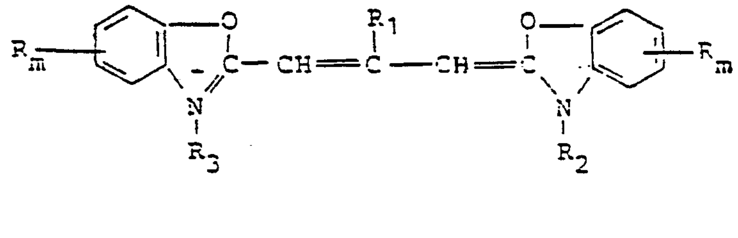

in welcher

R Chlor oder Brom,
m 1 oder 2,
$R_1$ Alkyl mit 1 bis 3 Kohlenstoffatomen,
$R_2$ $-(CH_2)_n-SO_3H$ oder $-(CH_2)_2-COOH$,
$R_3$ $-(CH_2)_n-SO_3-$ oder $-(CH_2)_2-COO^-$ und
n 3 oder 4

bedeuten, als Sensibilisierungsfarbstoff in der photoleitfähigen Schicht. Vorzugsweise enthält die photoleitfähige Schicht als Sensibilisierungsfarbstoff eine Verbindung der folgenden Formel

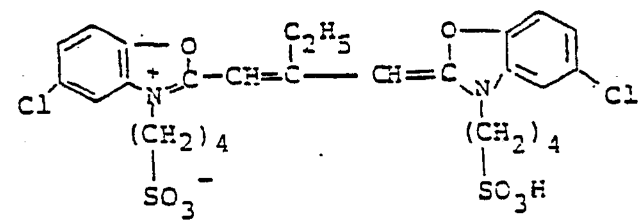

Hierdurch wird erreicht, daß ein gegen grünes, gelbes und rotes Licht dunkelkammersicheres Aufzeichnungsmaterial für die elektrophotographische Reproduktion zur Verfügung gestellt werden kann, das eine scharf ausgeprägte selektive Sensibilisierung mit einem Maximum bei etwa 495 nm besitzt, und einen starken Steilabfall des Sensibilisierungsspektrums nach dem längerwelligen Teil des Spektrums aufweist.

Aus der Photographie ist bekannt, daß viele Cyaninfarbstoffe Silberhalogenid gut spektral zu sensibilisieren vermögen. Dagegen ist die Sensibilisierung elektrophotographischer Aufzeichnungsmaterialien mit derartigen Farbstoffen oft nur gering oder es tritt keine Sensibilisierung ein. Vielfach wirken Sensibilisierungsfarbstoffe, die in Schichten mit organischen Photoleitern sensibilisierend wirken, in photoleitfähigen Schichten mit anorganischem Photoleiter überhaupt nicht und umgekehrt.

Es wurde bereits in der deutschen Patentanmeldung, Aktenzeichen P 33 19 654.0, ein elektrophotographisches Aufzeichnungsmaterial vorgeschlagen, bei dem für die photoleitfähige Schicht mit organischem Photoleiter Sensibilisierungsfarbstoffe der genannten Art gut eingesetzt werden können. Hieraus konnte aber nicht geschlossen werden, daß die erfindungsgemäßen Sensibilisierungsfarbstoffe auch in Verbindung mit Zinkoxid als Photoleiter enthaltenden photoleitfähigen Schichten gut einsetzbar sind.

Die erfindungsgemäß verwendeten Sensibilisierungsfarbstoffe zeichnen sich durch ein intensives und schmales Sensibilisierungsspektrum mit einem scharfen Maximum bei ca. 495 nm und einen ausgeprägten Steilabfall nach dem längerwelligen Spektralbereich hin aus. Dies gewährleistet eine hohe Dunkelkammersicherheit gegen längerwelliges Licht bereits ab ca. 530 nm. Hierdurch erzielt man zusätzlich mehr Sicherheit und eine bessere Qualität der hergestellten Produkte durch visuelle Kontrolle der Arbeitsvorgänge und angenehmere Arbeitsbedingungen. Das Aufzeichnungsmaterial ist dadurch hervorragend geeignet für Argonionenlaser, die bei 488 nm (514 nm) emittieren, und für im ähnlichen Bereich emittierende Lichtquellen.

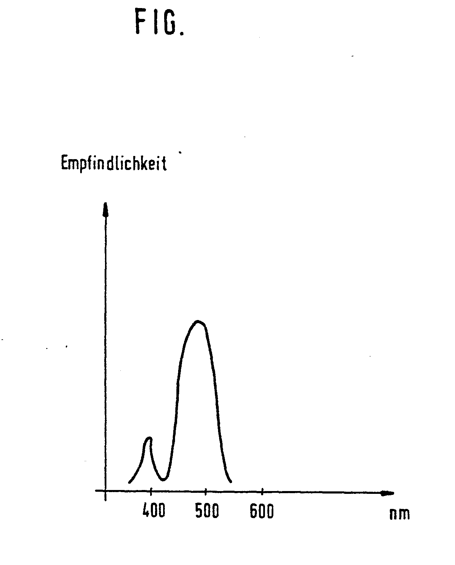

Die beigefügte Abbildung stellt ein Sensibilisierungsspektrogramm für eine erfindungsgemäß sensibilisierte Zinkoxid-Photoleiterschicht dar, das man durch Belichtung mit einer Xenonhochdrucklampe XBO 150/1 durch ein Interferenzverlauffilter Veril R-60, Nr. B 71542.14 mit Graukeil und Tonerentwicklung erhielt. Der starke Steilabfall nach dem längerwelligen Teil des Spektrums und das stark ausgeprägte selektive Maximum sind deutlich angezeigt.

Das Aufzeichnungsmaterial nach der Erfindung eignet sich beispielsweise als Oszillographenpapier oder für Druckplatten, die in Automaten, die zur Herstellung von Rollenoffsetdruckformen Verwendung finden (z. B. Laserite[R] RE der Hoechst AG) eingesetzt werden. Es eignet sich auch zur Verwendung als Zweitkopie bei der Laserbelichtung von Druckplatten. Von besonderem Vorteil ist in vielen Fällen gegenüber organischen Photoleiterschichten die hohe Empfindlichkeit des Aufzeichnungsmaterials, hervorgerufen durch die an sich schon höhere Grundempfindlichkeit dieser anorganischen Photoleiterschichten in Verbindung mit der intensiven spektralen Sensibilisierung.

Die Herstellung der erfindungsgemäßen Sensibilisierungsfarbstoffe kann nach den Angaben in DE-PS 704 141 bzw. US-PS 2 503 776 erfolgen.

Die Konzentration der erfindungsgemäßen Sensibilisierungsfarbstoffe hängt von der im Einzelfall verwendeten Photoleiterschicht, dem erwünschten Effekt und auch von den verwendeten Sensibilisierungsfarbstoffen ab. Üblich ist ein Zusatz im Bereich von etwa 0,01 bis 5 Gewichtsprozent, vorzugsweise werden etwa 0,05 bis 0,5 Gewichtsprozent, bezogen auf das Gewicht des anwesenden Photoleiters, verwendet.

Das Aufzeichnungsmaterial, in dem Ladungserzeugung und Ladungstransport in einer photoleitfähigen Schicht oder in mehreren Schichten erfolgen können, enthält Photoleiter auf ZnO-Basis.

Die Korngröße des photoleitfähigen Zinkoxids beträgt zum Beispiel 0,1 bis 15 Mikrometer.

Die ein geeignetes, isolierendes Bindemittel oder eine Bindemittelmischung enthaltende photoleitfähige Schicht hat vorzugsweise einen spezifischen Widerstand, der annähernd zwischen $10^7$ und $10^{14}$ $\Omega \cdot cm$ liegt.

Die photoleitfähige Schicht kann zwischen 50 und 97 Gewichtsprozent der photoleitfähigen Teilchen, bezogen auf das Bindemittel, enthalten. Ein bevorzugtes Gewichtsverhältnis des Bindemittels zu den Teilchen liegt zwischen 1 : 4 und 1 : 10.

Es kann jedes polymere oder harzartige Bindemittel oder eine Mischung von polymeren Bindemitteln verwendet werden, die für die Verwendung in elektrophotographischen, photoleitfähiges Zinkoxid enthaltenden Schichten bereits bekannt sind.

Geeignete Bindemittel besitzen einen Widerstand, der höher als der inhärente Widerstand der photoleitfähigen Zinkoxidteilchen ist. Geeignet sind zum Beispiel elektrisch isolierende, organische, harzartige Bindemittel vom Typ der Polyurethane, Polyester, Polycarbonate, Polystyrole, chlorierter Gummi, Acrylharze, Alkydharze, Siliconharze oder Vinylacetat-Mischpolymerisate, zum Beispiel Vinylchloridacetatharz.

Die photoleitfähigen Schichten können aus einem organischen Lösungsmittel oder einer Lösungsmittelmischung, aus einer Emulsion von organischen Lösungsmitteln und Wasser oder aus einem wäßrigen Medium aufgetragen werden.

Die Schichtträger des Aufzeichnungsmaterials können flächig oder zylindrisch ausgebildet sein und in bekannter Weise aus einer Metallplatte, einer Metallfolie, aus metallisierten Papieren oder metallisierten Folien, aus elektrisch leitenden Papieren oder aus Papieren oder Folien, die mit einem elektrisch leitenden Kunststoff beschichtet sind, oder in anderer Weise leitfähig gemachten Unterlagen bestehen.

Auf dem erfindungsgemäßen Aufzeichnungsmaterial können in bekannter Weise auf diesem selbst Tonerbilder erzeugt werden. Es ist aber auch möglich, entweder das Ladungsbild oder das Tonerbild auf ein Bildempfangsmaterial zu übertragen.

Das elektrophotographische Aufzeichnungsmaterial kann als übliche Zusätze in der photoleitfähigen Schicht Verlaufmittel und Weichmacher und/oder zwischen Schichtträger und photoleitfähiger Schicht Haftvermittler enthalten.

Nachstehende Beispiele sollen die Erfindung näher erläutern, jedoch nicht hierauf begrenzen :

## Beispiel 1

Ein hochnaßfestes Trägerpapier mit einer Flächenmasse von etwa 100 g/m², das zwecks elektrischer Leitfähigkeit rückseitig mit einer Rußpartikeln enthaltenden Bindemittelschicht versehen worden war, wurde vorderseitig mit einer Barriereschicht gegen organische Lösungsmittel ausgerüstet und kalandriert. Die Bildempfangsschicht wurde wie folgt hergestellt : 100 Gewichtsteile photoleitfähiges Zinkoxid wurden zusammen mit 40 Gewichtsteilen einer 50 %igen Lösung eines modifizierten Multipolymeren des Vinylacetats in Toluol vermischt. Die Mischung wurde etwa 3 Stunden in der Kugelmühle gemahlen und dann mittels einer Drahtrakel zu einem Trockenschichtgewicht von 25 bis 30 g/m² auf den Papierschichtträger aufgetragen. Der Lösung waren 50 mg des Sensibilisierungsfarbstoffes nach Formel 2 der Formeltabelle zugesetzt worden.

Die Schicht wurde mittels einer Corona (Spannung 5 kV negativ) im Abstand von 25 mm aufgeladen und bebildert.

Das Material war ohne störende Restfärbung und zeigte eine ausgeprägte selektive Sensibilisierung mit einem Maximum von 500 nm und einem Steilabfall zum langwelligen Teil des Spektrums hin.

## Beispiel 2

Eine Beschichtungslösung, wie in Beispiel 1 beschrieben, wurde auf eine 100 µm starke Aluminiumfolie aufgebracht. Nach dem Verdunsten des Lösungsmittels ergab sich eine etwa 5 µm dicke photoleitfähige Schicht.

Die Schicht wurde mittels Corona aufgeladen und mit einem Argonionenlaser im Leistungsbereich 0,2 bis 0,5 mW (Nennleistung 50 mW, Ausgangsleistung 15 mW) bei einem Vorschub von 400 Linien/cm in einem üblichen Automaten, der zur Herstellung von Druckformen dient, bebildert und in der für Zinkoxid-Druckplatten üblichen Weise weiterbehandelt.

Die Druckplatte war mit einem Maximum bei 500 nm selektiv und mit Steilabfall zum langwelligen Gebiet des Spektrum hin empfindlich, wie dies in der Abbildung zum Ausdruck kommt, und zeichnet sich durch hohe Dunkelkammersicherheit aus.

Vergleichsweise wurde ein Aufzeichnungsmaterial hergestellt, das anstelle des erfindungsgemäßen Sensibilisierungsfarbstoffes den Cyaninfarbstoff Astrazonorange R (C.I. 48040), gemäß DE-PS 2 526 720, enthielt. Der Sensibilisator war wirkungslos. Das Material ließ sich nicht bebildern.

## Beispiel 3

Zur Herstellung eines Registrierpapiers für Argonionenlaser-Schreiber wurde die Papierbasis, wie in Beispiel 1 beschrieben, mit einer Zinkoxid enthaltenden Schicht, die als Bindemittel ein Copolymerisat aus Vinylacetat und Maleinsäure enthielt und, wie in Beispiel 1 beschrieben, sensibilisiert war, versehen.

Das Papier war praktisch restfärbungsfrei, während Vergleichspapiere, die mit einer Mischung aus Bromphenolblau (50 mg), Fluorescein (50 mg), Rose Bengale (270 mg), Eosin (400 mg), bezogen auf 100 g Zinkoxid, sensibilisiert worden waren, starke rote Restfärbung zeigten. Das erfindungsgemäße Aufzeichnungsmaterial konnte ohne Bildschäden im Rotlicht und auch bei gelbem Licht verarbeitet werden, während bei gleicher Behandlung das Vergleichsmaterial ein Verschwinden oder eine deutliche Abschwächung des Bildes bzw. der registrierten Kurve aufwies.

Formeltabelle

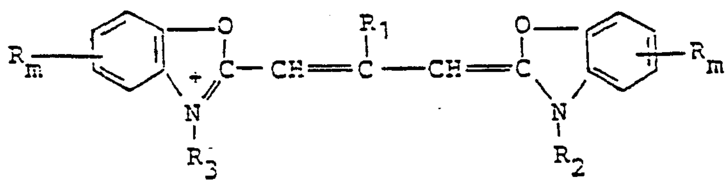

1

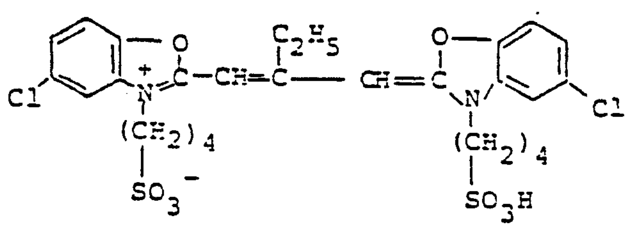

2

**Patentansprüche**

1. Elektrophotographisches Aufzeichnungsmaterial, bestehend aus einem elektrisch leitenden Schichtträger und einer photoleitfähigen Schicht, enthaltend Photoleiter, Sensibilisierungsfarbstoff, Bindemittel und übliche Zusätze, gekennzeichnet durch die Kombination von Zinkoxid als Photoleiter und einer Verbindung der allgemeinen Formel

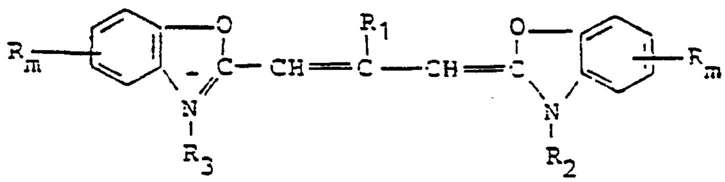

in welcher

R Chlor oder Brom,

$R_1$ Alkyl mit 1 bis 3 Kohlenstoffatomen,

$R_2$ $-(CH_2)_n-SO_3H$ oder $-(CH_2)_2-COOH$,

$R_3$ $-(CH_2)_n-SO_3^-$ oder $-(CH_2)_2-COO^-$ und

m 1 oder 2 und

n 3 oder 4

bedeuten, als Sensibilisierungsfarbstoff in der photoleitfähigen Schicht.

2. Aufzeichnungsmaterial nach Anspruch 1, dadurch gekennzeichnet, daß der Sensibilisierungsfarbstoff eine Verbindung der folgenden Formel ist :

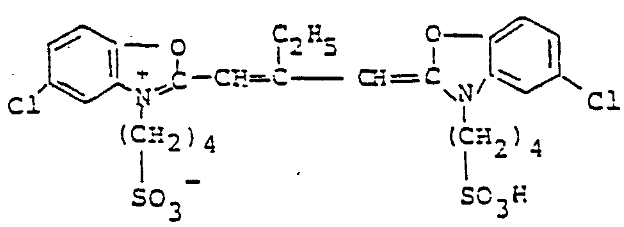

3. Aufzeichnungsmaterial nach Ansprüchen 1 oder 2, dadurch gekennzeichnet, daß der Sensibilisierungsfarbstoff in Mengen von 0,05 bis 0,5 Gewichtsprozent, bezogen auf den anwesenden Photoleiter, vorhanden ist.

**Claims**

1. Electrophotographic recording material which comprises an electrically conductive support and a photoconductive layer containing a photoconductor, a sensitizing dye, a binder, and customary additives, characterized in that it comprises in its photoconductive layer a combination of zinc oxide as the photoconductor and a compound corresponding to the general formula

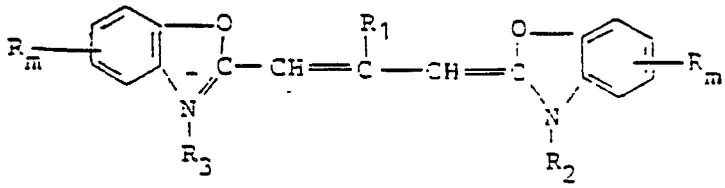

wherein
R is clorine or bromine,
$R_1$ is an alkyl group having from 1 to 3 carbon atoms,
$R_2$ is $-(CH_2)_n-SO_3H$ or $-(CH_2)_2-COOH$,
$R_3$ is $-(CH_2)_n-SO_3^-$ or $-(CH_2)_2-COO^-$,
m is 1 or 2, and
n is 3 or 4,
as the sensitizing dye.

2. A recording material as claimed in claim 1, wherein the sensitizing dye comprises a compound corresponding to the following formula

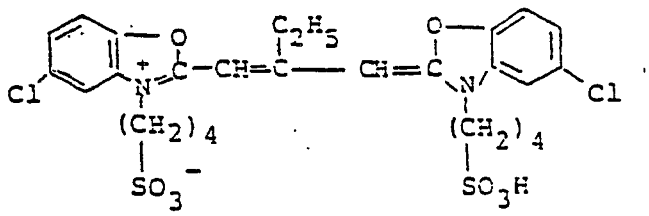

3. A recording material as claimed in claim 1 or 2, wherein the sensitizing dye is added in quantities ranging from 0.05 to 0.5 % by weight, based on the weight of the photoconductor used.

**Revendications**

1. Matériau de reproduction électrophotographique, comprenant un support conducteur de l'électricité et une couche photoconductrice, contenant un photoconducteur, un colorant sensibilisateur, un liant et des additifs habituels, caractérisé par la combinaison d'oxyde de zinc en tant que photoconducteur et d'un composé de formule générale :

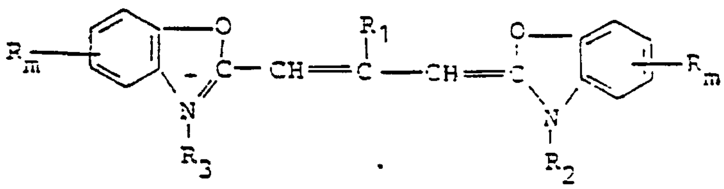

dans laquelle
R représente le chlore ou le brome,
$R_1$ est un alkyle de 1 à 3 atomes de carbone,
$R_2$ est $-(CH_2)_n-SO_3H$ ou $-(CH_2)_2-COOH$,
$R_3$ est $-(CH_2)_n-SO_3^-$ ou $-(CH_2)_2-COO^-$ et
m est 1 ou 2 et
n est 3 ou 4
en tant que colorant sensibilisateur dans la couche photoconductrice.

2. Matériau de reproduction selon la revendication 1, caractérisé en ce que le colorant sensibilisateur est un composé de formule suivante :

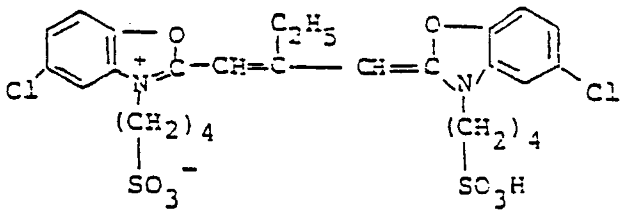

3. Matériau de reproduction selon les revendications 1 ou 2, caractérisé en ce que le colorant sensibilisateur est présent en des quantités allant de 0,05 à 0,5 % en poids, par rapport au photoconducteur utilisé.

FIG.